# EUROPEAN PATENT APPLICATION

(11) **EP 2 261 799 A1**
(43) Date of publication of application: **15.12.2010**
(21) Application number: 09175369.9
(22) Date of filing: 09.11.2009
(51) Int. Cl.: G06F 9/455, G06F 9/445

(54) **Electronic device, computer-implemented system, and application display control method therefor**

(30) Priority: 12.06.2009 TW 98119839
(71) Applicant: Acer Incorporated, Taipei County (TW)
(72) Inventor: Lin, Szu-Wen, Hsichih Taipei County (TW); Lee, Chuan-Wei, Hsichih Taipei County (TW); Lin, Tzu-Chieh, Hsichih Taipei County (TW)
(74) Representative: Ilgart, Jean-Christophe

(57) **Abstract**

An electronic device (1), a computer-implemented system, and an application display control method, wherein the electronic device (1) has a process unit (13) that executes an operating system kernel (14), and then executes a first and a second software platform (15, 16) via the operating system kernel (14). When a first application (17) is executed on the first software platform (15), a first window manager (151) of the first software platform (15) controls a screen area (171) within which the first application (17) being executed is displayed. The second software platform (16) is notified by the first application (17) to execute a second application (18), and a second window manager (161) of the second software platform (16) displays in the screen area (171) a screen image (181) that is generated when the second application (181) is executed.

## Description

### FIELD OF THE INVENTION

The present invention relates to an electronic device, a computer-implemented system, and an application display control method therefor, and more particularly, to a technical field of displaying on a first software platform a screen image of an application executed on a second software platform.

### BACKGROUND OF THE INVENTION

Generally speaking, an operating system may be considered as a combination of an operating system kernel and a software platform. The operating system kernel generally includes a memory management module, a process execution control module, various kinds of peripheral hardware device drive modules, a power management module, and so on. One of the functions of the operating system kernel is to allow the software platform to be successfully executed on electronic hardware via the operating system kernel. The software platform generally includes a window manager, an activity manager, a notification monitor, and an application terminator, and functions mainly to manage the executed condition and display the condition of different applications executed thereon.

Currently, most computers use a Microsoft Windows operating system (OS), while other computers use a Linux operating system. Meanwhile, with the popularization of various kinds of mobile Internet devices, such as smart phones, personal digital assistants (PDAs) and the like, there are more and more electronic devices that use an operating system other than the Microsoft Windows and the Linux operating system. Every operating system has its own advantages and disadvantages. Some of the currently available operating systems provide powerful functions but require more resources and the electronic devices using these operating systems consume more electric power, while other operating systems require fewer resources but provide only limited functions. Besides, many firms have respectively developed their own software platforms based on the same operating system kernel.

Different operating systems or software platforms use different window managers, and software firms will develop application programs specific to different window managers. However, many application programs may not execute across different window managers. For example, an application particularly developed for a first window manager may not be executed on a second window manager. Therefore, according to prior art, a user who wants to experience the advantages of several different applications at the same time, such as to use an application with powerful functions under an operating system consuming less resources, would have to wait until related software firms have developed an application satisfying such conditions. This would no doubt bring a lot of inconveniences to the user.

### SUMMARY OF THE INVENTION

It is therefore a primary object of the present invention to provide an electronic device, a computer-implemented system, and an application display control method therefor, so that a user is given increased flexibility in using different applications.

To achieve the above and other objects, the electronic device according to the present invention includes a display unit, a storage unit, and a process unit. The storage unit stores an operating system kernel, a first software platform, a second software platform, a first application, and a second application. The first software platform includes a first window manager, and the second software platform includes a second window manager. The process unit executes the operating system kernel, and then executes the first and the second software platform via the operating system kernel. When the first application is executed on the first software platform, the first window manager controls a screen area of the display unit (11) within which the first application being executed is displayed. Meanwhile, the first application notifies the second software platform for the latter to execute the second application, and the second window manager will then display in the screen area a screen image that is generated by the second application being executed.

In the present invention, the first application, when notifying the second software platform, also sends parameters related to the screen area to the second window manager.

The electronic device may further include an input unit. The first application, when receiving an operation instruction from the input unit, sends the received operation instruction to the second application, and the second application executes an action according to the operation instruction.

The operation instruction may be a cursor position data, a click instruction, a drag instruction, or a text input instruction.

According to an embodiment of the present invention, the first and the second software platform are executed via the operating system kernel with multi-thread processes.

According to the present invention, the second software platform is executed in background processing.

The computer-implemented system according to the present invention is applicable to an electronic device, and includes a first software platform, a second software platform, and an operating system kernel. The first software platform includes a first window manager, and the second software platform includes a second window manager. The operating system kernel controls the first and the second software platform to execute on the electronic device. When a first application is executed on the first software platform, the first window manager controls a screen area within which the first application being executed is displayed. Meanwhile, the first application notifies the second software platform to execute a second application, and the second window manager will then display in the screen area a screen image that is generated by the second application being executed.

In the present invention, the first application, when notifying the second software platform, also sends parameters related to the screen area to the second window manager.

In the present invention, the first application, when receiving an operation instruction, further sends the received operation instruction to the second application, and the second application executes an action according to the operation instruction.

The operation instruction may be a cursor position data, a click instruction, a drag instruction, or a text input instruction.

According to an embodiment of the present invention, the first and the second software platform are executed via the operating system kernel with multi-thread processes.

According to the present invention, the second software platform is executed in background processing.

The application display control method according to the present invention includes the following steps: (1) executing an operating system kernel; (2) executing a first and a second software platform via the operating system kernel, wherein the first software platform includes a first window manager and the second software platform includes a second window manager; (3) executing a first application on the first software platform, and the first window manager controlling a screen area within which the first application being executed is displayed; (4) notifying the second software platform via the first application to execute a second application; and (5) displaying in the screen area a screen image via the second window manager, and the screen image is generated by the second application being executed.

In the step of notifying the second software platform, the first application further sends parameters related to the screen area to the second window manager.

The application display control method further includes the following step after the notifying step when the first application receives an operation instruction: sending the received operation instruction via the first application to the second application, and executing an action via the second application according to the operation instruction.

The operation instruction may be a cursor position data, a click instruction, a drag instruction, or a text input instruction.

According to an embodiment of the present invention, the first and the second software platform are executed via the operating system kernel with a multi-thread process.

According to the present invention, the second software platform is executed in background processing.

### BRIEF DESCRIPTION OF THE DRAWINGS

The structure and the technical means adopted by the present invention to achieve the above and other objects may be best understood by referring to the following detailed description of the preferred embodiments and the accompanying drawings, wherein
Fig. 1 is a block diagram of an electronic device according to an embodiment of the present invention;
Fig. 2 schematically shows the electronic device of the present invention in use;
Fig. 3 is a block diagram showing the configuration of a computer-implemented system according to the present invention;
Fig. 4 is a flowchart showing the steps included in an application display control method for the electronic device and the computer-implemented system of the present invention;
Fig. 5 is a flowchart showing the steps executed on a first and a second software platform in implementing the application display control method shown in Fig. 4; and
Fig. 6 is a flowchart showing the steps included in a second embodiment of the application display control method according to the present invention.

### DETAILED DESCRIPTION OF THE PREFERRED EMBODIMENTS

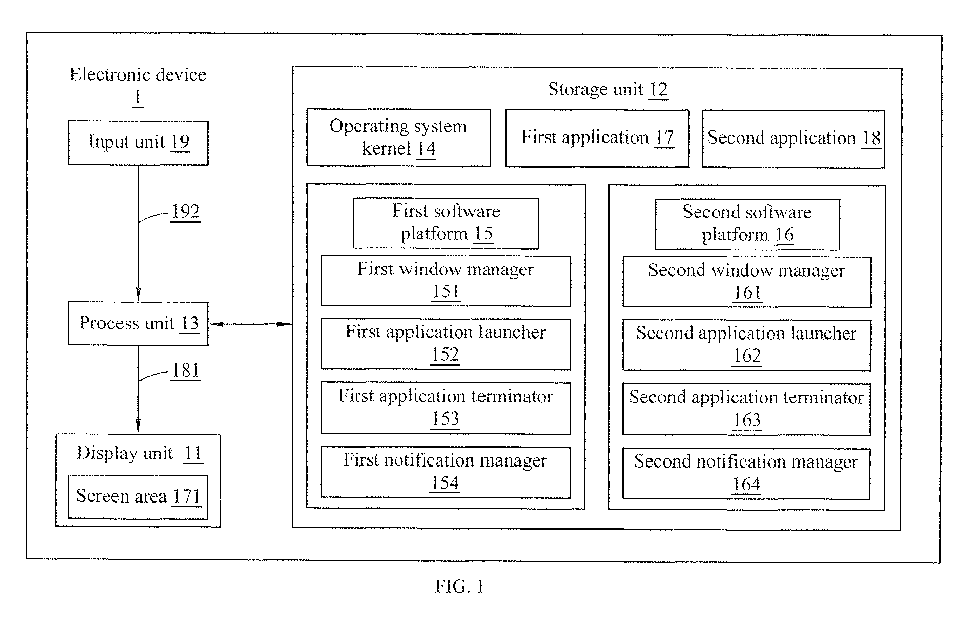

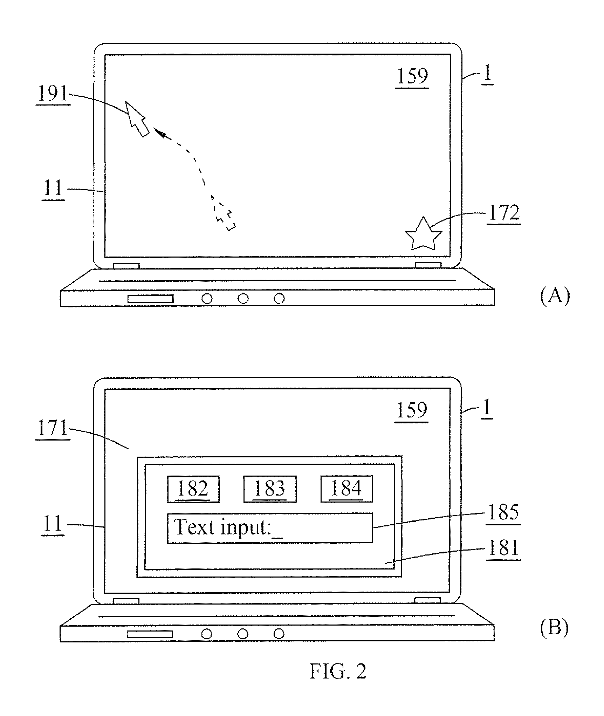

Please refer to Fig. 1 that is a block diagram of an electronic device 1 according to an embodiment of the present invention, and to Fig. 2 that schematically shows the electronic device 1 in use. As shown, the electronic device 1 includes a display unit 11, a storage unit 12, a process unit 13, and an input unit 19. The storage unit 12 stores an operating system kernel 14, a first software platform 15, a second software platform 16, a first application 17, and a second application 18. The first software platform 15 includes a first window manager 151, a first application launcher 152, a first application terminator 153, and a first notification manager 154. The second software platform 16 includes a second window manager 161, a second application launcher 162, a second application terminator 163, and a second notification manager 164. The application launchers launch applications, the application terminators terminate applications, the notification managers receive or issue notifications, and the window managers control the screen areas within which the launched applications are displayed.

The first application 17 is developed for the first software platform 15 and may only be executed on the first software platform 15. Similarly, the second application 18 may only be executed on the second software platform 16. The input unit 19 allows a user to enter an operation instruction 192 for controlling the applications, and is preferably a cursor control device, a keyboard, a keypad, or a touch control device. The operation instruction 192 may be a cursor position data; a click instruction, such as a single left mouse click, a single right mouse click, a double left mouse click, or a double right mouse click; a drag instruction; or a text input instruction.

When the electronic device 1 is booted, the process unit 13 reads the operating system kernel 14 from the storage unit 11 and executes the operating system kernel 14, and then executes the first software platform 15 and the second software platform 16 via the operating system kernel 14. Preferably, the first software platform 15 and the second software platform 16 are executed with a multi-thread processes, so that the first and the second software platform 15, 16 may be executed concurrently and there is a communicating interface between multiple threads to allow mutual notification of messages and data sharing between the two software platforms. The second software platform 16 is executed in background processing. As may be seen in Fig. 2(A), after the electronic device 1 is booted, the display unit 11 shows a desktop image 159 for the first software platform 15, and the second software platform 16 is executing in background and not shown. On the desktop image 159, there is an icon 172 of the first application 17. In the illustrated embodiment, a user may operate the input unit 19 to control a cursor 191 on the desktop image 159, so as to move the cursor 191 to an application to be executed. Then, the user may push a predetermined key of the input unit 19 to execute the selected application. Since the input unit control technique and the multi-thread technique are known by a person of ordinary skill in the art, they are not discussed in details herein.

When the first application 17 is executed on the first software platform 15, the first window manager 151 controls the first application 17 being executed to display in a screen area 171 of the display unit 11. After being executed, the first application 17 issues a notification to the second software platform 16. When the notification issued by the first application 17 is received by the second notification manager 164, the second application 18 starts executing. When the first application 17 issues the notification to the second software platform 16, parameters of the screen area 171 are also sent to the second window manager 161. When the second application 18 is executed, a screen image 181 is generated. The second window manager 161 displays the screen image 181 in the screen area 171 according to the received parameters of the screen area 171. When the second application 18 executes some actions and brings changes in the screen image 181, the screen image 181 is updated in the screen area 171.

As may be seen in Fig. 2(B), when the user clicks to select the icon 172, the screen area 171 is shown on the desktop image 159; and an image displayed in the screen area 171 is the screen image 181 generated by the second application 18 being executed. In the illustrated embodiment, the screen image 181 shows a plurality of control buttons 182∼184 and a data input zone 185. When the user inputs an operation instruction to the first application 17 by, for example, moving the cursor 191 to the control button 183, and then pushes a corresponding key of the input unit 19 or inputs some text at the data input zone 185, the first application 17 will send the operation instruction, that is, a cursor position, a key trigger state or an input text, to the second application 18, so that the second application 18 executes a corresponding action according to the operation instruction.

The first and the second software platform may be executed when the electronic device 1 is booted, so as to shorten the time needed to launch the applications later. Alternatively, the first software platform 15 is executed first when the electronic device 1 is booted, and the second software platform 16 is executed later when the user has launched the first application 17. Thereafter, the second application 18 is launched.

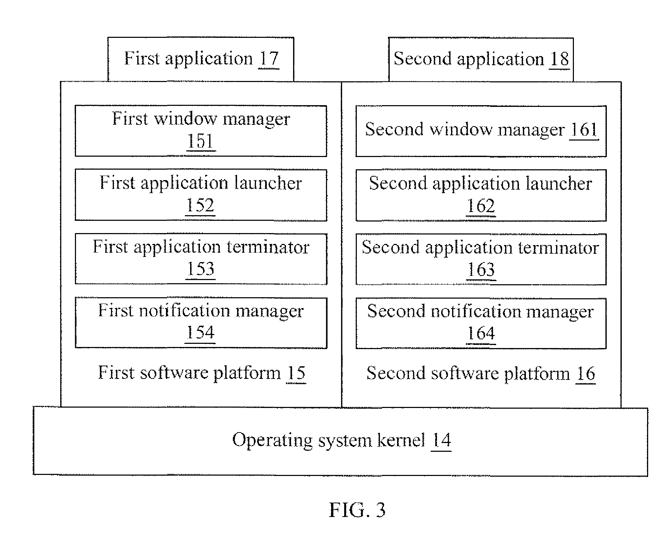

The operating system kernel 14, the first software platform 15 and the second software platform 16 together form a computer-implemented system, an architecture of which is shown in Fig. 3. Since the functions of the computer-implemented system have been described in the preceding paragraphs, they are not repeated herein. From the above description, it is clear the present invention is different from the conventional multi-window computer system. In the conventional multi-window computer system, one single window manager is used on the same one software platform to control the display windows for multiple applications. However, all the applications must be execute on the same one software platform. On the other hand, the electronic device 1 of the present invention allows the user to watch on the first software platform 15 the screen of an application being executed on the second software platform 16, providing the user with largely increased convenience in using the electronic device 1.

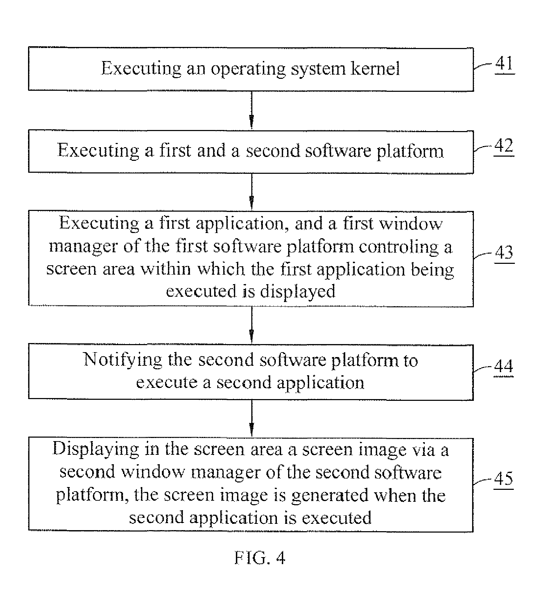

Please refer to Fig. 4 that is a flowchart showing the steps included in an application display control method of the present invention. As shown, in a first step 41, executing an operating system kerne; in a second step 42, executing a first and a second software platform via the operating system kernel, wherein the first software platform includes a first window manager and the second software platform includes a second window manager; in a third step 43, executing a first application on the first software platform and the first window manager controling a screen area within which the first application being executed is displayed; in a fourth step 44, notifying the second software platform via the first application to execute a second application; and in a fifth or final step 45, displaying in the screen area a screen image via the second window manager, and the screen image is generated by the second application being executed.

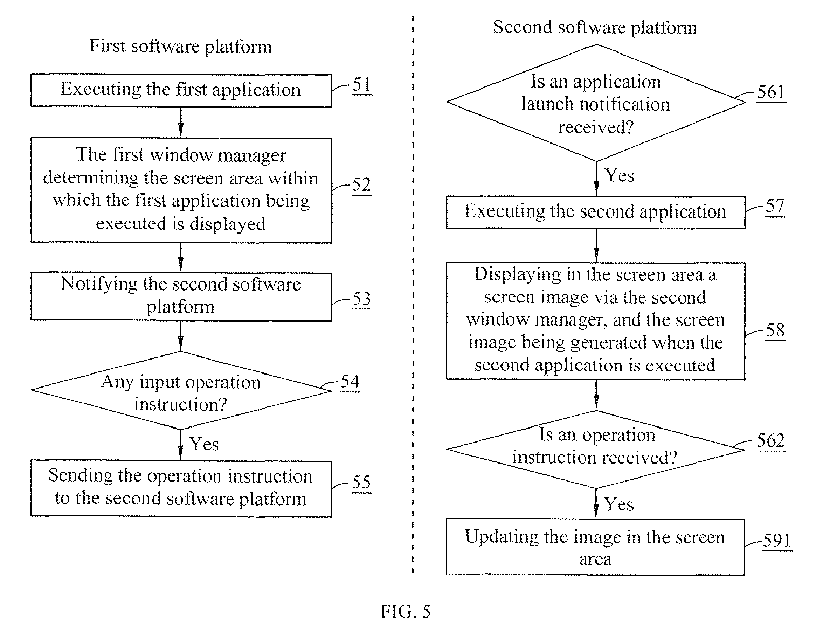

Fig. 5 is a flowchart showing the steps being executed on the first and the second software platform in implementing the application display control method of the present invention as shown in Fig. 4. Since the first and the second software platform are executed with a multi-thread process, the two software platforms may operate separately. In a step 51, the first application is executed on the first software platform. In a step 52, the first window manager determining the screen area within which the first application being executed is displayed, such as the area 171 shown in Fig. 2. In a step 53, notifying the second software platform via the first application. That is, the first application issues an application launch notification to the second software platform, so as to trigger the second software platform to perform a further action. Then, go to a step 54.

At the second software platform, it is determined in a step 561 whether any application launch notification has been received. If an application launch notification, such as that issued in the step 53 is received, the second application is executed in a step 57. Then, in a step 58 the second window manager displays in the screen area the screen image generated by the second application being executed. Therefore, as shown in Fig. 2(B), a user may watch on the desktop image 159 of the first software platform 15 the screen image 181 generated by the second application being executed. Then, go to a step 562.

In the case of being executed in background, the second software platform is not able to receive any operation instruction directly from an input device. Therefore, at the first software platform, it is determined in the step 54 whether any operation instruction has been input to the first application. If yes, the operation instruction is sent to the second software platform in a step 55. Meanwhile, at the second software platform, in the step 562, it is determined whether there is any input operation instruction. If yes, the second application executes an action according to the received operation instruction in the step 58. As shown in Fig. 2(B), when the user moves the cursor 191 to click at the control button 183 in the screen image 181, the first application may receive the cursor position and the click instruction, such as a single left mouse click, a single right mouse click, a double left mouse click or a double right mouse click. The first application will send the cursor position and the click instruction to the second application, and the second application may determine from the cursor position that the user has clicked at the control button 183, and then follows the click instruction to execute an action corresponding to the control button 183. Then, in a step 591, when the second application updates its screen image according to the executed action, the screen area showing the first application is also updated.

The first and the second software platform may be executed when an electronic device is booted, so as to shorten the time needed to launch the applications later. Alternatively, the first software platform may be executed first when the electronic device is booted, and the second software platform is executed later when the user has launched the first application. Thereafter, the second application is launched.

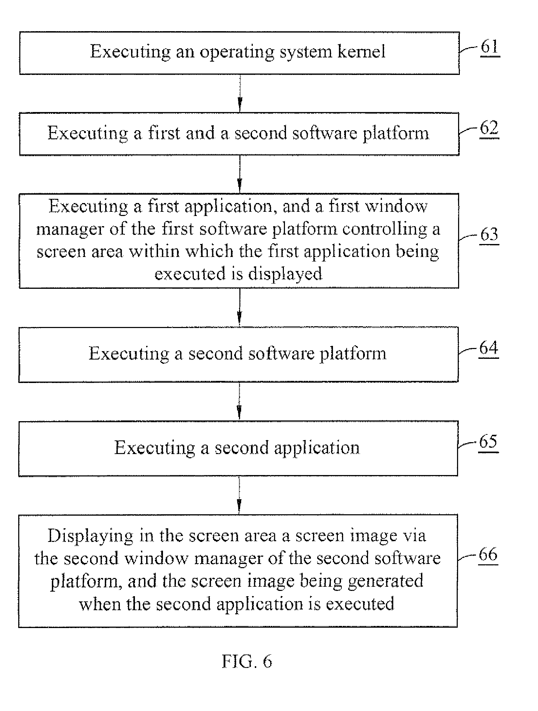

Fig. 6 is a flowchart showing the steps included in another embodiment of the application display control method of the present invention. In a step 61, an operating system kernel is executed when an electronic device is booted. In a step 62, a first software platform is executed via the operating system kernel, wherein the first software platform includes a first window manager. In a step 63, execute a first application on the first software platform and the first window manager controls a screen area within which the first application being executed is displayed.

In a step 64, the second software platform is executed via the operating system kernel; and in a step 65, execute a second application on the second software platform. In practical implementation of the application display control method of the present invention, the first application, when being launched, will issue a notification to the operating system kernel, so that the operating system kernel executes the second software platform with a multi-thread processes, and the second software platform is executed in background processing. In this way, the user would not see any image of the second software platform being executed and become confused. Further, when the second software platform is enabled, the first application will send parameters related to the screen area to a second window manager of the second software platform. Finally, in a step 66 the second window manager displays in the screen area a screen image that is generated by the second application being executed.

Preferably, the operating system kernel is a Linux kernel. Since many firms have developed different software platforms based on the Linux kernel, such as X-window platform and Android platform, these firms will also develop specific applications based on these software platforms. With the electronic device, the computer-implemented system, and the application display control method of the present invention, a user may use the applications of multiple software platforms on the same one electronic device. For example, the user may select a software platform that enables quick booting but has fewer applications to serve as the first software platform, and another software platform that supports more applications to serve as the second software platform. Therefore, when using the electronic device of the present invention, the user may enjoy the advantage of quick booting without facing the embarrassing condition of insufficient applications or insufficient functions.

The present invention has been described with some preferred embodiments thereof and it is understood that many changes and modifications in the described embodiments may be carried out without departing from the scope and the spirit of the invention that is intended to be limited only by the appended claims.

## Claims

1. An electronic device (1), comprising:
a display unit (11);
a storage unit (12) capable of storing an operating system kernel (14), a first software platform (15), a second software platform (16), a first application (17) and a second application (18), and the first software platform (15) including a first window manager (151), and the second software platform (16) including a second window manager (161); and
a process unit (13) capable of executing the operating system kernel (14) and then executing the first and the second software platform (15, 16) via the operating system kernel (14);
wherein when the first application (17) is executed on the first software platform (15), the first window manager (151) controls a screen area (171) of the display unit (11) within which the first application (17) being executed is displayed, and the first application (17) notifies the second software platform (16) to execute the second application (18), and then the second window manager (161) displays in the screen area (171) a screen image (181) that is generated by the second application (18) being executed.

2. The electronic device (1) according to claim 1, wherein when the first application (17) notifies the second software platform (16), parameters related to the screen area (171) are also sent to the second window manager (161).

3. The electronic device (1) according to claim 1 or 2, further comprising an input unit (19), wherein the first application (17), when receiving an operation instruction (192) from the input unit (19), sends the received operation instruction (192) to the second application (18), and the second application (18) executes an action according to the operation instruction (192).

4. A computer-implemented system applicable to an electronic device (1), comprising:
a first software platform (15) including a first window manager (151);
a second software platform (16) including a second window manager (161); and
an operating system kernel (14) capable of controlling the first and the second software platform (15, 16) to execute on the electronic device (1);
wherein when a first application (17) is executed on the first software platform (15), the first window manager (151) controls a screen area (171) within which the first application (17) being executed is displayed, and the first application (17) notifies the second software platform (16) to execute a second application (18), and then the second window manager (161) displays in the screen area (171) a screen image (181) that is generated by the second application (18) being executed.

5. The computer-implemented system according to claim 4, wherein when the first application (17) notifies the second software platform (16), parameters related to the screen area (171) are also sent to the second window manager (161).

6. The computer-implemented system according to claim 4 or 5, wherein the first application (17) further sends a received operation instruction (192) to the second application (18), and the second application (18) executes an action according to the operation instruction (192).

7. An application display control method, comprising the following steps:
executing an operating system kernel (14);
executing a first and a second software platform (15, 16) via the operating system kernel (14), wherein the first software platform (15) includes a first window manager (151), and the second software platform (16) includes a second window manager (161);
executing a first application (17) on the first software platform (15), and the first window manager (151) controlling a screen area (171) within which the first application (17) being executed is displayed;
notifying the second software platform (16) via the first application (17) for the latter to execute a second application (18); and
displaying in the screen area (171) a screen image (181) via the second window manager (161), and the screen image (181) being generated by the second application (18) being executed.

8. The application display control method according to claim 7, when the first application (17) receives an operation instruction (192), further comprising steps of:
sending a received operation instruction (192) via the first application (17) to the second application (18); and
executing an action via the second application (18) according to the operation instruction (192).

9. The application display control method as claimed in claim 8, the operation instruction (192) is a cursor position data, a click instruction, a drag instruction or a text input instruction.

10. The application display control method according to one of claims 7 to 9, wherein the second software platform (16) is executed in background processing.
